# EUROPEAN PATENT APPLICATION

(11) **EP 2 789 590 A1**
(43) Date of publication of application: **15.10.2014**
(21) Application number: 14163995.5
(22) Date of filing: 09.04.2014
(51) Int. Cl.: C03B 37/014

(54) **Sintering apparatus**

(30) Priority: 10.04.2013 JP 2013081687
(71) Applicant: Shin-Etsu Chemical Co., Ltd., Tokyo 100-0004 (JP)
(72) Inventor: Inoue, Dai, Kamisu-shi, Ibaraki 314-0116 (JP); Uchida, Kazuya, Kamisu-shi, Ibaraki 314-0116 (JP)
(74) Representative: Pfenning, Meinig & Partner GbR

(57) **Abstract**

A sintering apparatus comprising a furnace core tube having an opening in a top end through which the soot deposition body is inserted, and having atmospheric gas introduced therein from below and expelled upward; a shaft from which the soot deposition body hangs; a lid that has the shaft inserted therethrough and can cover the opening; a heating furnace that heats the soot deposition body; an internal lid in a top portion of the furnace core tube that divides the top portion of the furnace core tube into an upper region and a lower region; and a gas flow path that connects the two regions to each other and has the atmospheric gas flow therethrough. Total cross-sectional area, relative to movement direction of the atmospheric gas, of the gas flow path is less than cross-sectional area, relative to movement direction of the atmospheric gas, of the furnace core tube.

## Description

### BACKGROUND

### 1. TECHNICAL FIELD

The present invention relates to the manufacturing of a composite quartz glass with high purity for use in optical fiber or the like.

### 2. RELATED ART

Japanese Patent Application Publication No. 2012-250887 describes, as a method of manufacturing composite quartz glass, a method that includes heating and sintering, in a sintering furnace, a soot deposition body that has been manufactured by depositing a fine powder of silicon dioxide created by a reaction involving a silicon compound. The soot deposition body is manufactured using a known method such as VAD or OVD. The sintering furnace includes a heating furnace and a furnace core tube, for example, and a gas suitable for a sintering atmosphere is introduced into the furnace core tube and expelled from the furnace core tube. The soot deposition body is inserted into the furnace core tube and heated in a suitable atmosphere to become a transparent glass body. In order to maintain a suitable atmosphere during sintering, the furnace core tube is formed as a tube with a sealed bottom, for example. The top end of the furnace core tube has an opening for inserting the soot deposition body, and this opening can be closed using a lid. The bottom of the furnace core tube includes a gas inlet through which the gas is introduced, and the lid includes a gas outlet through which gas is expelled. Furthermore, a packing is provided between the lid and the furnace core tube to increase the air-tightness. The atmospheric gas is preferably helium, which has high thermal conduction and high solubility to glass. Furthermore, when manufacturing glass for use as optical fiber, a large amount of chlorine is added as a dehydrating agent, since it is preferable to remove the water.

Recently, larger glass bodies have become necessary and so the diameter of the opening in the furnace core tube has also become larger. Due to this, it is becoming difficult to maintain the air-tightness between the lid and the furnace core tube. This is because the slight bending of the flanges of the lid or the furnace core tube causes leaking. Furthermore, only an extremely narrow range of selections are possible for packing to increase air-tightness in conditions of being exposed to high temperature and corrosive gas. Since a system is used in which gas introduced at room temperature is heated to a high temperature in the heating furnace and expands, and then is expelled from the heating furnace to cool and contract, it is difficult to maintain constant pressure within the furnace core tube, and sometimes this pressure drops below the atmospheric pressure.

If a high pressure is maintained within the furnace core tube in order to prevent this, there is a danger that the pressure within the furnace core tube will be too high and that the furnace core tube made of quartz glass or the like will be damaged. On the other hand, when the pressure within the furnace core tube is less than atmospheric pressure and the air-tightness cannot be maintained, external atmosphere mixes with the gas in the furnace core tube. When external atmosphere is mixed in the furnace core tube, nitrogen or the like that has a lower solubility for glass in comparison to helium remains within the glass, which creates air bubbles, thereby significantly lowering the quality of the glass.

Therefore, it is an objective of the present invention to overcome the above problems and to provide a sintering apparatus that is capable of manufacturing high-quality glass.

### SUMMARY

According to a first aspect of the present invention, provided is A sintering apparatus for manufacturing quartz glass by heating and sintering a soot deposition body formed of a powder containing silicon dioxide, the sintering apparatus comprising a furnace core tube that has an opening in a top end thereof through which the soot deposition body is inserted, and has atmospheric gas introduced therein from below and expelled upward; a shaft from which the soot deposition body hangs; a lid that has the shaft inserted therethrough and can cover the opening; a heating furnace that heats the soot deposition body inserted into the furnace core tube; an internal lid that is provided in a top portion of the furnace core tube and divides the top portion of the furnace core tube into two regions that are an upper region and a lower region; and a gas flow path that connects the two regions to each other and has the atmospheric gas flow therethrough. Total cross-sectional area, relative to a movement direction of the atmospheric gas, of the gas flow path is less than cross-sectional area, relative to the movement direction of the atmospheric gas, of the furnace core tube.

The summary clause does not necessarily describe all necessary features of the embodiments of the present invention. The present invention may also be a subcombination of the features described above.

### BRIEF DESCRIPTION OF THE DRAWINGS

Fig. 1 is a schematic view of the sintering apparatus 1 for an optical fiber base material.
Fig. 2 is a schematic view of the structure near the lid 4 used in the first embodiment.
Fig. 3 is a schematic view of the structure near the lid 4 used in the second embodiment.

### DESCRIPTION OF EXEMPLARY EMBODIMENTS

Hereinafter, some embodiments of the present invention will be described. The embodiments do not limit the invention according to the claims, and all the combinations of the features described in the embodiments are not necessarily essential to means provided by aspects of the invention.

The glass sintering apparatus according to the present embodiment is a sintering apparatus for manufacturing quartz glass by heating and sintering a soot deposition body, which is formed by a powder including fine silicon dioxide or the like. The sintering apparatus includes a furnace core tube that has an opening in a top end thereof through which the soot deposition body is inserted and has atmospheric gas introduced therein from below and expelled upward, a shaft from which the soot deposition body hangs, a lid that has the shaft inserted therethrough and can cover the opening, a heating furnace that heats the soot deposition body inserted into the furnace core tube, an internal lid that is provided in a top portion of the furnace core tube and divides the top portion of the furnace core tube into two regions that are an upper region and a lower region, and a gas flow path that connects the two regions to each other and has the atmospheric gas flow therethrough. The total cross-sectional area, relative to a movement direction of the atmospheric gas, of the gas flow path is less than the cross-sectional area, relative to the movement direction of the atmospheric gas, of the furnace core tube.

The soot deposition body formed by a powder including fine silicon dioxide or the like is heated and sintered using the sintering apparatus according to the present embodiment, to manufacture quartz glass. As described above, the sintering apparatus includes the heating furnace, the furnace core tube, the shaft, and the lid. The furnace core tube has an opening in the top portion thereof, and the soot deposition body is inserted into the furnace core tube through this opening. The shaft supports the soot deposition body in a hanging manner. The lid has a hole through which the shaft is inserted, and is used to close the opening of the furnace core tube. The atmospheric gas for sintering is introduced from the bottom of the furnace core tube, and escapes from the top.

Furthermore, the sintering apparatus includes an internal lid in the upper portion of the furnace core tube, which divides the region in the top portion of the furnace core tube into two regions that are an upper region and a lower region, and a gas flow path that connects these two regions and allows atmospheric gas to flow therebetween. The total cross-sectional area, relative to the movement direction of the atmospheric gas, of the gas flow path is less than the cross-sectional area, relative to the movement direction of the atmospheric gas, of the furnace core tube. With this sintering apparatus, the linear velocity of the atmospheric gas flowing through the gas flow path can be made greater than the linear velocity of the atmospheric gas flowing through the furnace core tube, and there is a significantly reduced risk that external atmosphere unintentionally sucked in through the region near the lid of the furnace core tube will spread to a region where the soot deposition body is being sintered. Therefore, by using the sintering apparatus, it is possible to manufacture high-quality glass by sintering a soot deposition body.

In order to arrange the internal lid at a prescribed position, a protrusion may be provided in an inner wall of the furnace core tube or a step may be provided in an inner wall of the furnace core tube, and the internal lid may be supported on the protrusion or the step.

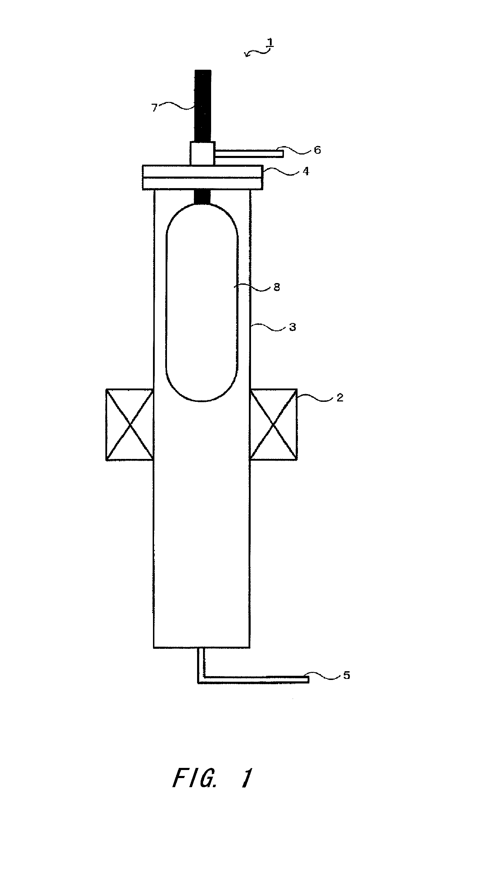

Fig. 1 is a schematic view of the sintering apparatus 1 for an optical fiber base material. The sintering apparatus 1 includes a heating furnace 2, a furnace core tube 3, and a lid 4. The heating furnace 2 may use an electric furnace, for example. The furnace core tube 3 is formed as a tube with a closed bottom. The inner diameter of the furnace core tube 3 may be 350 mm, for example. An opening is formed in the top portion of the furnace core tube 3, and this opening can be closed by the lid 4. A gas inlet 5 through which the gas is introduced is provided on the bottom of the furnace core tube 3, and a gas outlet 6 through which the gas is expelled is provided in the lid 4. During sintering, gas suitable for a sintering atmosphere is introduced into the furnace core tube 3 through the gas inlet 5, and expelled from the gas outlet 6. The soot deposition body 8 hanging down from the shaft 7 is inserted into the furnace core tube 3 through the opening in the top portion, and the lid 4 is then closed. Packing 9 (e.g., an O-ring) is arranged between the lid 4 and the flange of the furnace core tube 3, to increase the air-tightness of the furnace core tube 3. When sintering is actually performed, the soot deposition body 8 is heated in a state where a suitable atmosphere is maintained by controlling the atmosphere through the gas inlet 5 and the gas outlet 6, thereby turning the soot deposition body 8 into a transparent glass body.

A soot deposition body 8 with an outer diameter of 320 mm and a length of 2000 mm was manufactured using OVD, and sintering of this soot deposition body 8 was performed using the sintering apparatus 1 described above. The atmospheric gas used for the sintering was helium with added chlorine, and the chlorine served to dehydrate the soot deposition body 8. The following describes the present invention using a comparison between the embodiments of the present invention and a comparative example.

### (Comparative Example)

With the structure described above, i.e. performing sintering of the soot deposition body 8 in the furnace core tube 3 without providing the internal lid 11, the resulting glass body had many remaining small air bubbles, which are believed to be caused by the inclusion of external atmosphere in an amount of 2% to 3%. Convection of the atmospheric gas occurs in the top portion of the furnace core tube 3, and the air flow is disturbed by this convection, which results in a localized and instantaneous pressure fluctuation occurring in the top portion of the furnace core tube 3. Due to this pressure fluctuation, the internal pressure in the top portion of the furnace core tube 3 drops below the external pressure, and the external air including N₂ enters into the furnace core tube 3 through gaps in the packing 9. This N₂ travels along the disturbed air flow, and mixes with the atmospheric gas within the furnace core tube 3. The N₂ mixed with the atmospheric gas enters into the soot deposition body, causing the small air bubbles.

### (First Embodiment)

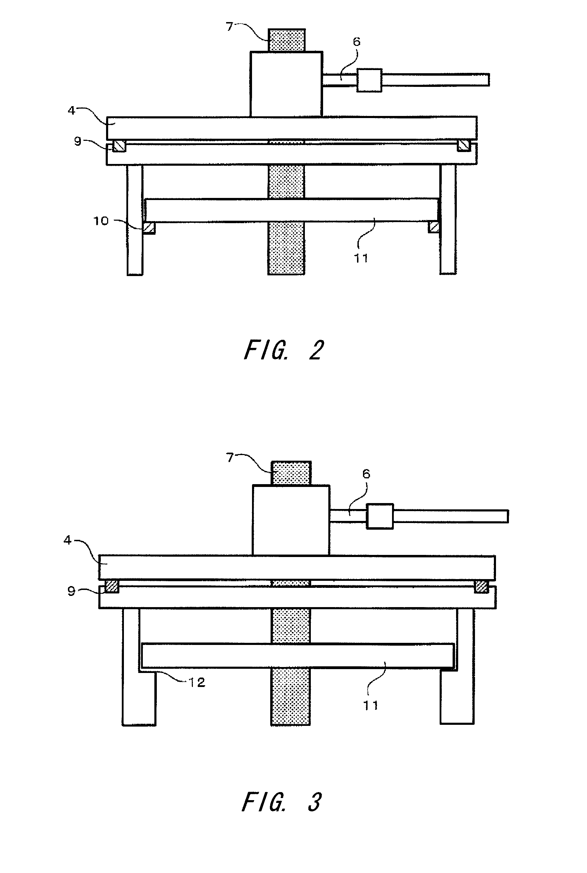

Fig. 2 is a schematic view of the structure near the lid 4 used in the first embodiment. As shown in Fig. 2, a protrusion 10 is provided near the top end on the inner wall of the furnace core tube 3, and the internal lid 11 is arranged to be supported on the protrusion and divide the top portion of the furnace core tube 3 into two regions. The clearance between the internal lid 11 and the furnace core tube 3 was set to be 0.5 mm, and the clearance between the internal lid 11 and the shaft 7 from which the soot deposition body 8 hangs was set to 1 mm. With these clearances, a gas flow path was formed that connects the upper and lower regions resulting from the division by the internal lid 11, and the flow of atmospheric gas is not completely blocked. With this structure, the soot deposition body 8 was sintered in the same manner as in the comparative example, and there were absolutely no remaining small air bubbles, such as those seen in the comparative example, in the resulting glass body.

In this way, by setting the total cross-sectional area, relative to the movement direction of the atmospheric gas, of the gas flow path formed from the clearances between the internal lid 11 and the shaft 7 to be less than the total cross-sectional area, relative to the movement direction of the atmospheric gas, of the furnace core tube, the upward linear velocity of the atmospheric gas can be increased. For example, when the furnace core tube 3 has an inner diameter of 350 mm and the shaft 7 has an outer diameter of 50 mm, the flow path cross-sectional area relative to the movement direction of the atmospheric gas in the top portion of the furnace core tube 3 is approximately 1000 cm². Here, the atmospheric gas flow rate near the lid 4 in the top portion of the furnace core tube 3 is 100 cm³/second, and the linear velocity of the atmospheric gas is calculated to be 0.1 cm/second.

On the other hand, when the internal lid 11 is provided and the gas flows only through the gas flow path formed from the clearances between the internal lid 11 and the shaft 7, a gas flow path cross-sectional area of approximately 1.5 cm² is formed from the shaft 7 with an outer diameter of 50 mm and a clearance of 1 mm. Based on the flow rate of the atmospheric gas and the cross-sectional area, the linear velocity of the gas flowing through the gas flow path was calculated to be 66.7 cm/second. In this way, the linear velocity of the atmospheric gas flowing through the gas flow path can be made greater than the linear velocity of the atmospheric gas in the top portion of the furnace core tube, and even if there is a downward flow (e.g. -1 cm/second) caused by the localized convection, the upward linear velocity of the atmospheric gas flowing through the gas flow path far exceeds this downward flow. As a result, even if N₂ mixes with the atmospheric gas in the region above the internal lid 11, this N₂ can be prevented from entering into the region below the internal lid 11 where the soot deposition body 8 is heated by the heating furnace 2. The gas flow path may be formed by providing a recessed portion on at least one of the internal lid 11 and the protrusion 10 at the contact surface between the internal lid 11 and the protrusion 10, or by providing a through-hole in the internal lid 11.

### (Second Embodiment)

Fig. 3 is a schematic view of the structure near the lid 4 used in the second embodiment. As shown in Fig. 3, a step 12 is provided near the top end on the inner wall of the furnace core tube 3, and the internal lid 11 is arranged to be supported on the step 12 and divide the top portion of the furnace core tube 3 into upper and lower regions. The clearance between the internal lid 11 and the shaft 7 from which the soot deposition body 8 hangs was set to 1 mm. With this clearance, a gas flow path was formed that connects the upper and lower regions resulting from the division by the internal lid 11, and the flow of atmospheric gas is not completely blocked. With this structure, the soot deposition body 8 was sintered in the same manner as in the comparative example, and there were absolutely no remaining small air bubbles, such as those seen in the comparative example, in the resulting glass body.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

### List of Reference Numerals

1: sintering apparatus, 2: heating furnace, 3: furnace core tube, 4: lid, 5: gas inlet, 6: gas outlet, 7: shaft, 8: soot deposition body, 9: packing, 10: protrusion, 11: internal lid, 12: step

## Claims

1. A sintering apparatus for manufacturing quartz glass by heating and sintering a soot deposition body formed of a powder containing silicon dioxide, the sintering apparatus comprising:
a furnace core tube that has an opening in a top end thereof through which the soot deposition body is inserted, and has atmospheric gas introduced therein from below and expelled upward;
a shaft from which the soot deposition body hangs;
a lid that has the shaft inserted therethrough and can cover the opening;
a heating furnace that heats the soot deposition body inserted into the furnace core tube;
an internal lid that is provided in a top portion of the furnace core tube and divides the top portion of the furnace core tube into two regions that are an upper region and a lower region; and
a gas flow path that connects the two regions to each other and has the atmospheric gas flow therethrough, wherein
total cross-sectional area, relative to a movement direction of the atmospheric gas, of the gas flow path is less than cross-sectional area, relative to the movement direction of the atmospheric gas, of the furnace core tube.

2. The sintering apparatus according to Claim 1, wherein
at least a portion of the gas flow path is formed by the internal lid.

3. The sintering apparatus according to Claim 1 or 2, wherein
the gas flow path is provided at an engaging portion between the shaft and the internal lid.

4. The sintering apparatus according to any one of Claims 1 to 3, wherein
the internal lid is supported by a protrusion provided on an inner wall of the furnace core tube.

5. The sintering apparatus according to any one of Claims 1 to 3, wherein
the internal lid is supported by a step provided on an inner wall of the furnace core tube.
